# EUROPEAN PATENT APPLICATION

(11) **EP 1 544 611 A1**
(43) Date of publication of application: **22.06.2005**
(21) Application number: 03792640.9
(22) Date of filing: 30.07.2003
(51) Int. Cl.: G01N 30/80, G01N 30/46, B01D 15/08

(54) **CHROMATOGRAPHIC SEPARATOR**

(30) Priority: 20.08.2002 JP 2002239177
(71) Applicant: Organo Corporation, Tokyo 136-8631 (JP)
(72) Inventor: OGAWA, Yuji c/o ORGANO CORPORATION, Koto-ku, Tokyo 136-8631 (JP)
(74) Representative: Pätzold, Herbert, Dr.-Ing.
(86) International application number: PCT/JP2003/009644
(87) International publication number: WO 2004/019030

(57) **Abstract**

An intermittently-moving-head or simulated-moving-bed chromatographic separator capable of stably maintaining purities of separated components, wherein a loop path (16) is formed by connecting four or more columns (14) to one another. Feed liquid material containing component-A and component-C and liquid eluent are injected into the loop path (16), followed by circulating the same in the loop path (16). A density detector (54) is disposed in the loop path (16) at a position adjacent to a component-A extraction valve (41), to detect the component density in the loop path (16) during the circulation step. When the density of the components reaches a reference density or higher, it is judged that component-A and component-C of the feed liquid material are separated from each other and the process moves from the circulation step to a next component extraction step.

## Description

### Technical Field

The present invention relates to a chromatographic separator, and more particularly, to a process control in an intermittently-moving-bed or simulated-moving-bed chromatographic separator.

### Background Art

Chromatographic separators have been widely used in the sugar industry, pharmaceutical industry, and the like, with a purpose of extracting one or more components from a feed liquid material that has been obtained in a natural or chemical reaction and contains a plurality of components. Recently, there are proposed various types of moving-bed chromatographic separators in addition to a conventional batch fixed-bed type.

In the moving-bed chromatographic separator, filler (adsorbent) and liquid eluent are received in advance in a separation reactor (column). After a feed liquid material containing two components has been introduced into the column from a feed port, a liquid eluent is introduced into the column from another feed port such that the liquid eluent moves at a constant linear velocity. The respective components contained in the feed liquid material are moved in the column at different linear velocities from each other since the two components have different affinities to the filler. For example, a component having a lower affinity to the filler is moved at a higher linear velocity; whereas a component having a higher affinity is moved at a lower linear velocity. Therefore, the feed liquid material can be separated into two components by extracting the circulated liquid at appropriate two positions of the column.

The chromatographic separators used heretofore are divided into three types in terms of moving method of feed positions of the feed liquid material and liquid eluent and the positions of extracting the respective components. These three types include: a simulated-moving-bed type in which liquid injection valves and liquid extraction valves, which are configured as electromagnetic valves, are used in combination so that these valves are sequentially switched; a simulated-moving-bed type using a rotary valve having a number of nozzles; and an intermittently-moving-bed type that uses a rotary valve having a number of nozzles and moving the filled columns.

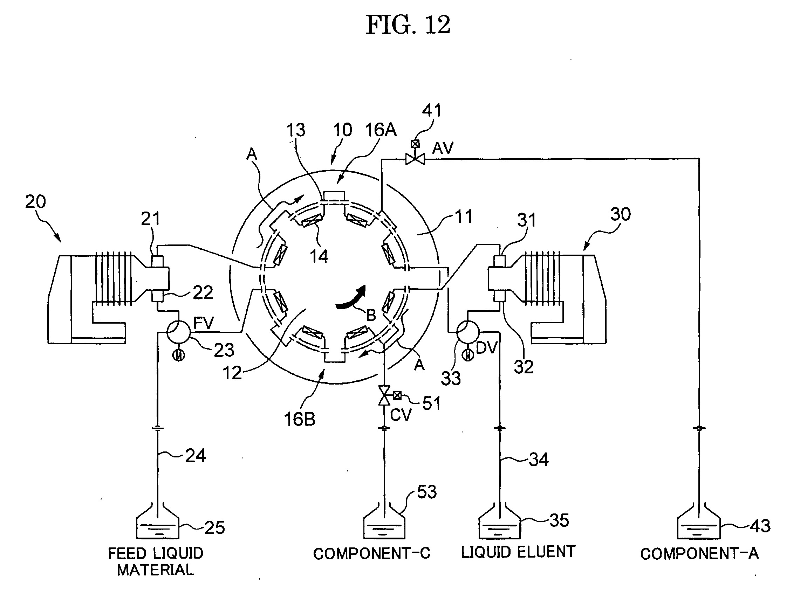

FIG. 12 is a schematic diagram showing the configuration of the intermittently-moving-bed chromatographic separator described in Patent Publication JP-A-2001-13123. This separator has two pumps 20 and 30 and two switching valves 23 and 33. The switching valves 23 and 33 are used to execute a selective switching between a circulation mode and a liquid injection mode. In the circulation mode, the pumps 20 and 30 are connected to a loop path 16. In the liquid injection mode, each inlet port of the pumps 20 and 30 is connected to a liquid injection tube. When the first and second switching valves 23 and 33 are set to the circulation mode during a particular step, eight columns 14 each filled up with adsorbent are connected to one another in an endless loop through the nozzles 13 of a rotary valve 10 and the first and second pumps 20 and 30, to configure a loop path 16. The liquid flows in the loop path 16 in direction "A" (clockwise direction), shown in FIG. 12. Each of the first and second pumps 20 and 30 is configured as a constant-rate pump that delivers a uniform flow of the liquid.

The loop path 16 is comprised of first and second loop-path halves 16A and 16B. The first loop-path half 16A extends from the discharge port 21 of the first pump 20 to the inlet port 32 of the second pump 30, including therebetween first to fourth columns 14, as viewed in the direction of liquid flow "A". The second loop-path half 16B extends from the discharge port 31 of the second pump 30 to the inlet port 22 of the first pump 20, including therebetween fifth to eighth columns 14, as viewed in the direction of liquid flow "A". A feed-liquid-material storage tank 25 is connected to the inlet port 22 of the first pump 20 through the first switching valve 23 by a feed-liquid-material injection tube 24, and connected through the first pump 20 to one end of the first loop-path half 16A. A liquid-eluent storage tank 35 is connected to the inlet port 32 of the second pump 30 through the second switching valve 33 by an eluent injection tube 34, and is connected through the second pump 30 to one end of the second loop-path half 16B.

Each of the feed-liquid-material injection tube 24 and the liquid-eluent injection tube 34 is connected to the loop path 16 when a corresponding switching valve 23 or 33 is set to the liquid injection mode, thereby initiating injection of a feed liquid material or injection of a liquid eluent. A component-A storage tank 43 that receives therein the separated component-A is connected to the outlet port of the third column, provided at the rear end portion of the first loop-path half 16A, through a component-A injection valve 41. A component-C storage tank that receives therein the separated component-C is connected to the outlet port of the fifth column, provided at the front end portion of the second loop-path half 16B, through a component-C extraction valve 51.

The rotary valve 10 has a hollow cylindrical stationary member 11 and a cylindrical rotary member 12 which is disposed for rotation within the stationary member 11 and has an exterior wall slidably moving on the inner wall of the stationary member 11. Mounted on the rotary member 12 are eight columns 14. When the rotary member 12 is rotated intermittently, all of the columns 14 are shifted by one column position during each rotation. In the stationary state of the rotary valve 10, the inlet port and outlet port of each column 14 belonging to each of the loop path halves 16A and 16B are connected through the nozzles of the rotary valve 10 to the outlet port of the preceding column 14 and the inlet port of the succeeding column 14, respectively.

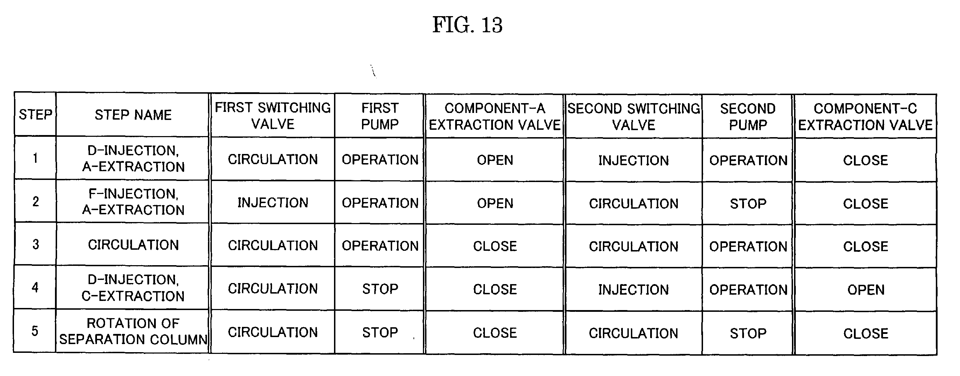

FIG. 13 is a table showing the operating statuses of components of the conventional chromatographic separator in respective steps. The separator sequentially and repeatedly operates for the following first to fifth steps: the first step includes injecting a liquid eluent "D" from the liquid-eluent storage tank 35 and extracting the component-A into the component-A storage tank; the second step includes injecting a feed liquid material "F" from the feed-liquid-material storage tank 25 and extracting the component-A into the component-A storage tank; the third step includes circulating internal liquid in the loop path 16; the fourth step includes injecting the liquid eluent "D" and extracting the component-C into the component-C storage tank; and the fifth step (flow-path switching step) includes stopping the liquid flow and rotating the rotary valve including the columns (separation reactors) 14 by a distance corresponding to one column.

It is possible to allow the pumps 20 and 30 to function as circulation pumps in one occasion, and to function as liquid injection pumps in another occasion by switching the connections of the two pumps 20 and 30 using the switching valves 23 and 33. This switching function reduces the number of pumps as well as the cost of the separator as a whole. In addition, a back-pressure valve is not used in the separator, so that pressure fluctuation in the loop path is suppressed. Therefore, it is possible to set lower pressure specifications for the devices in the loop path.

In the state where the columns are connected to one another in series, the separator performs a preparatory operation to measure the time length from which the feed liquid material to be separated is injected from the feed-liquid-material storage tank until each separated component has been extracted through the component extracting position. The separator calculates the moving speed of each component in the column based on the result of the preparatory operation. Then, it calculates the optimum liquid circulation speed for the circulation operation in which the columns are connected to one another in the loop path based on the obtained moving speed of each component. Finally, it calculates the optimum operation time length for each step in order to obtain calculated optimum liquid circulation speed, to thereby assign the optimum operation time length to each step. After the above preparations, the separator is moved into a regular service operation to extract each component from the feed liquid material.

It is preferable that the moving speed of components in the columns be stable. Actually, however, the moving speed is fluctuated due to a change in void spaces within the adsorbent filling the columns, a change in the pump discharge rate, or the like. Especially, in a small chromatographic separator using a reciprocating pump having a simple structure utilizing a ball check valve, the pump discharge rate is significantly fluctuated due to the influence of fine bubbles or solid-fine particles adhering onto the ball check valve. Further, in the case where a storage tank for the feed liquid material or liquid eluent is disposed above the inlet port of the pump, pressure in the inlet port of the pump is fluctuated with the consumption of the feed liquid material or liquid eluent to fluctuate the pump discharge rate.

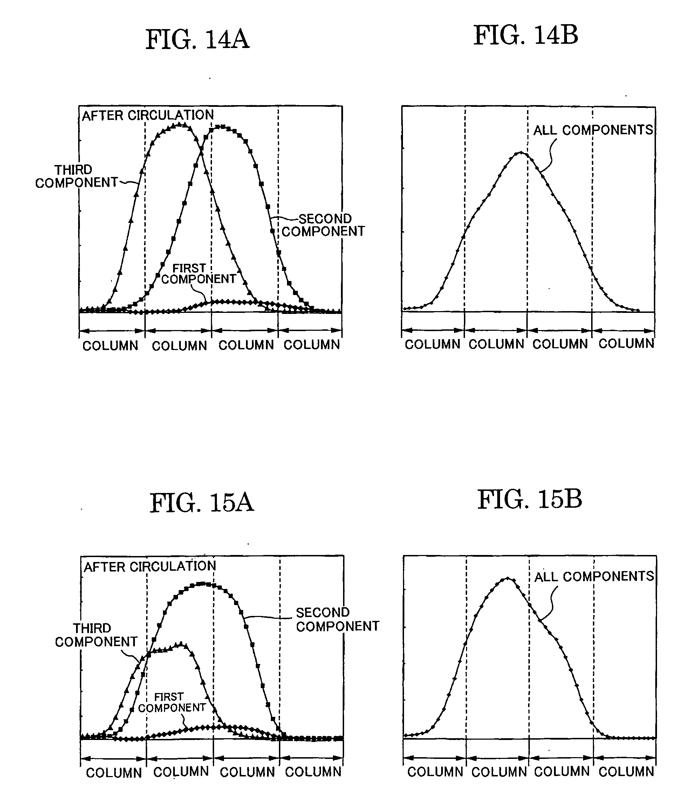

The moving speed of the circulated internal liquid in the columns is fluctuated due to the fluctuation of the pump discharge rate or the like. This generates an error with respect to the moving speed obtained in the preparatory operation. As a result, positional discrepancies are generated between the obtained feed-liquid-material injection position and component extracting position that have been actually set and the optimum injection position and extracting position that are determined by the density distribution at that time, thereby decreasing the purities of the separated components. FIGS. 14A, 14B, 15A, 15B, 16A, and 16B show the above situations. These graphs show the case where the in-column moving speed of the first to third components contained in the feed liquid material is decreased in that order. These graphs are presented for showing an exemplified case wherein the feed liquid material is separated into the component-A, which is a mixture of the first and second components, and the component-C as the third component.

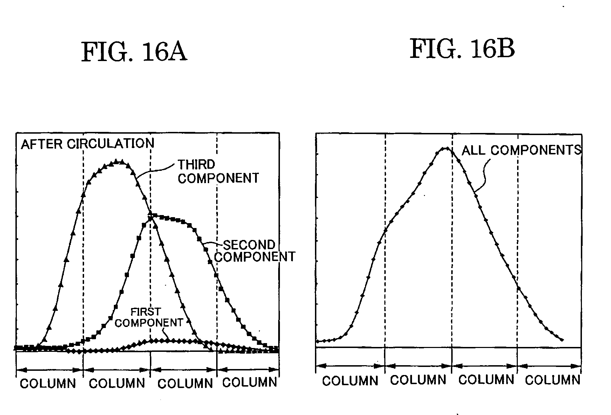

FIGS. 14A and 14B show the situations where the circulated internal liquid flows at a normal speed, which is a favorable condition. FIG. 14A shows the density distribution of the first to third components contained in the feed liquid material and having different moving speeds at the end of the circulation step. FIG. 14B shows total density distribution of all the components at the end of the circulation step in each case. Correspondingly, FIGS. 15A and 15B, and FIGS. 16A and 16B show the situations where the circulated liquid flows at a lower speed and at a higher speed than the normal flow speed, respectively. To simplify the graphs, it is assumed therein that the loop path is comprised of four columns. As can be seen from FIGS. 14A, 15A, and 16A, when the density distribution of each component is fluctuated at the time when the circulation step has been completed, separated components in good condition cannot be obtained from the extracting position disposed between the columns.

The decrease in the purities of the separated components caused due to the fluctuation of the moving speed in the columns can be eliminated by performing the preparatory operation again, calculating the moving speed in the columns at that time, and newly determining the optimum time length for each step based on the moving speed. In the above case, however, it is necessary to stop a regular service operation and resume the preparatory operation, thereby decreasing the rate of utilization of the system.

### Disclosure of the Invention

In view of the circumstances as described above, it is an object of the present invention to provide a chromatographic separator which is capable of solving the problems of the conventional chromatographic separator, that is, capable of stably maintaining the purity of each of the separated components even if the moving speed of each of the components is fluctuated.

The present invention provides a chromatographic separator having an endless loop path including four or more columns each having an inlet port and an outlet port, the loop path being formed by coupling the outlet port of one of the columns to the inlet port of a succeeding one of the columns, the chromatographic separator having a function of extracting first and second components from a feed liquid material including therein two or more components while injecting the feed liquid material and a liquid eluent into the loop path, the chromatographic separator operating for: a circulation step of circulating internal liquid in the loop path; an extraction step of extracting the first or second component while injecting the feed liquid material or liquid eluent; and a flow-path switching step of sequentially switching an injection port for the feed liquid material, an injection port for the liquid eluent, an extracting position for the first component, and extracting position for the second component in the loop path to a downstream side of the loop path, characterized by a density detector, connected to the loop path in a vicinity of the extracting position for the first component, to sequentially or repeatedly detect a component density of the liquid in the loop path during the circulation step; a comparator for comparing the component density against a reference density, and a process controller for shifting from the circulation step to the extraction step if the comparator detects that the component density is higher than the reference density.

According to the chromatographic separator of the present invention, it is possible to shift from the circulation step to the extraction step at an optimum timing for separating the feed liquid material into respective components and extracting the components by comparing the component density that has been detected by the density detector against the reference density. More specifically, by shifting from the circulation step to the extraction step based on the density of the components in the liquid flowing in the loop path, it is possible to match the obtained liquid injection position and component extracting position, which are actually set in the loop path, to the optimum liquid injection position and component extracting position, respectively, which are determined by the distribution of the density of the components. Therefore, excellent purities of the separated components can be obtained substantially without being influenced by the fluctuation in the moving speed of each component in the column, thereby eliminating the need to perform the preparatory operation again.

The chromatographic separator according to the present invention is applicable to an intermittently-moving-bed chromatographic separator or a simulated-moving-bed chromatographic separator. In the intermittently-moving-bed chromatographic separator, for example, the flow-path switching step is performed as a column rotation step. The feed liquid material has only to contain two or more components and may contain three or more components. The chromatographic separator of the present invention can obtain two or more separated components from such a feed liquid material. It is to be noted that the term "component density" or "density of components" means either the individual density of each component in the liquid or the density of the whole components in the liquid, or both of them.

In a preferred embodiment of the present invention, the extraction step includes a second-component extraction step of extracting the second component while injecting the liquid eluent; a first-component extraction step of extracting the first component while injecting the liquid eluent; and another first-component extraction step of extracting the first component while injecting the feed liquid material. By separating the step of extracting the first component into the two steps as described above, an excellent density distribution of the components in the circulated liquid can be obtained in the subsequent circulation step.

In addition, it is also preferable that the separator includes a timer for measuring a time interval between a start time of the circulation step and a time instant when the circulation step is shifted to the extraction step, wherein the process controller determines a time length of one or more extraction steps based on the time interval measured by the timer. The in-column moving speed of each component that influences the operation time length of the circulation step also influences the operation time length of extraction steps. In view of the above, a suitable operation time length is set for the subsequent extraction steps based on the measured time length of the circulation step.

It is also preferable that the reference density is switched at least between an initial reference density set for a start of operation of the chromatographic separator and a normal reference density set for a steady operation of the chromatographic separator. By employing the reference density in accordance with the operation state, excellent separated components can be obtained both at the time immediately after the start of the operation or in the steady operation. It is possible to provide a progressively increasing reference density that is increased with the operation time length between an initial reference density and another reference density for the steady operation. In this case, excellent separated components can be obtained in any operational stage from the start of the operation of the separator to the steady operation.

It is also preferable that the density detector is located in a vicinity of the extracting position for the first component on an upstream side thereof, and wherein the chromatographic separator further operating, subsequent to the flow-path switching step, for a remaining-liquid discharge step of discharging the liquid remaining in the density detector through the extracting position for the first component. By discharging the circulated liquid remaining in the density detector, a stable density distribution can be obtained in the next circulation step.

### Brief Description of Drawings

FIG. 1 is a schematic diagram showing the configuration of a chromatographic separator according to a first embodiment of the present invention;
FIG. 2 is a table showing steps performed in the chromatographic separator of FIG. 1 and corresponding operations of equipment components in the order of events;
FIG. 3 is a schematic diagram showing a flow path in the first step (circulation step) shown in FIG. 2;
FIG. 4 is a schematic diagram showing a flow path in the second step shown in FIG. 2;
FIG. 5 is a schematic diagram showing a flow path in the third step shown in FIG. 2;
FIG. 6 is a schematic diagram showing a flow path in the fourth step shown in FIG. 2;
FIG. 7 is a graph showing the density distribution in the loop path at the end of the first step (circulation step) shown in FIG. 2;
FIG. 8 is a graph showing the density distribution in the loop path at the end of the second step shown in FIG. 2;
FIG. 9 is a graph showing the density distribution in the loop path at the end of the third step shown in FIG. 2;
FIG. 10 is a graph showing the density distribution in the loop path at the end of the fourth step shown in FIG. 2;
FIG. 11 is a graph showing the density distribution in the loop path at the end of the fifth step shown in FIG. 2;
FIG. 12 is a schematic diagram showing the configuration of a conventional chromatographic separator;
FIG. 13 is a table showing the order of steps performed in the chromatographic separator of FIG. 12;
FIGS. 14A and 14B show the density distributions of the components in the case where the circulated liquid flows at a normal speed, which is a favorable condition, FIG. 14A shows the density distribution of the first to third components at the end of the circulation step, the components being contained in the feed liquid material and flowing through columns at different moving speeds from each other, and FIG. 14B shows the total density distribution of all the components at the end of the circulation step in each case;
FIGS. 15A and 15B show the cases similar to the cases of FIGS. 14A and 14B, respectively, except that the circulated liquid flows at a speed lower than the normal flow speed; and
FIGS. 16A and 16B show the cases similar to the cases of FIGS. 14A and 14B, respectively, except that the circulated liquid flows at a speed higher than the normal flow speed.

### Best Mode for Carrying Out the Invention

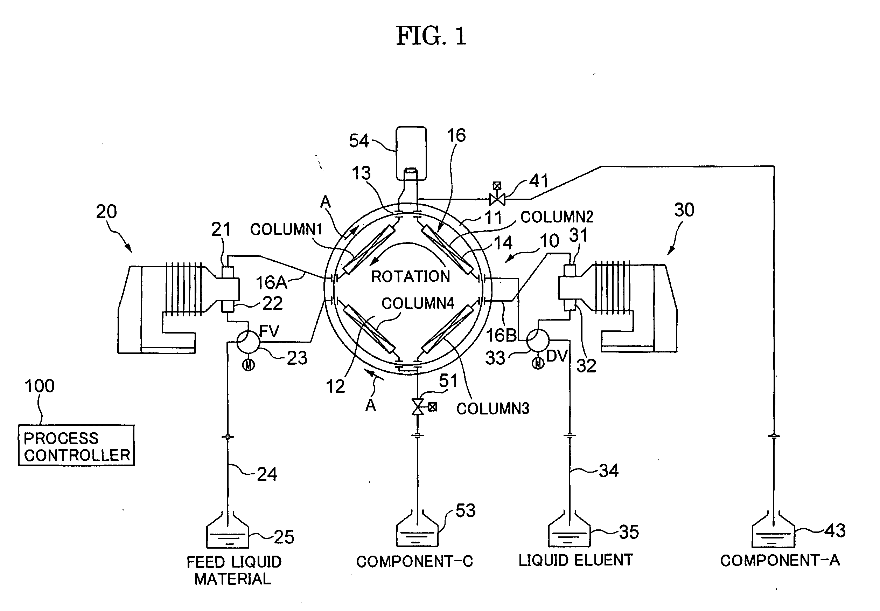

The present invention will be further described below in more detail based on an embodiment thereof with reference to the accompanying drawings. Referring to FIG. 1, a chromatographic separator according to the embodiment of the present invention has two pumps 20 and 30 and two switching valves 23 and 33. The switching valves 23 and 33 are used to execute a selective switching between a circulation mode and a liquid injection mode. In the circulation mode, the pumps 20 and 30 are connected to a loop path 16. In the liquid injection mode, each inlet port of the pumps 20 and 30 is connected to a liquid injection tube. In the present chromatographic separator, when the first and second switching valves 23 and 33 are set to the circulation mode during a particular step, four columns 14 each filled up with adsorbent are connected to one another in an endless loop through the nozzles 13 of a rotary valve 10 and the first and second pumps 20 and 30 to configure a loop path 16. The liquid flows in the loop path 16 in direction "A" (clockwise direction) as shown in the figure. Each of the first and second pumps 20 and 30 is configured as a constant-rate pump that delivers a uniform flow. The number of the columns is not limited so long as it is four or more.

The loop path 16 is comprised of first and second loop-path halves 16A and 16B. The first loop-path half 16A extends from the discharge port 21 of the first pump 20 to the inlet port 32 of the second pump 30, including therebetween column 1 and column 2, as viewed in the direction of liquid flow "A". The second loop-path half 16B extends from the discharge port 31 of the second pump 30 to the inlet port 22 of the first pump 20, including therebetween column 3 and column 4, as viewed in the direction of liquid flow "A". A feed-liquid-material storage tank 25 is connected to the inlet port 22 of the first pump 20 through the first switching valve 23 by a feed-liquid-material injection tube 24, and is connected through the first pump 20 to one end of the first loop-path half 16A. A liquid-eluent storage tank 35 is connected to the inlet port 32 of the second pump 30 through the second switching valve 33 by an eluent injection tube 34, and is connected through the second pump 30 to one end of the second loop-path half 16B.

Each of the feed-liquid-material injection tube 24 and the liquid-eluent injection tube 34 is connected to the loop path 16 when a corresponding switching valve 23 or 33 is set to the liquid injection mode, thereby initiating injection of a feed liquid material or injection of a liquid eluent. A component-A storage tank that receives therein the separated component-A is connected to the outlet port of the column 1, provided in the first loop-path half 16A, through a component-A extraction valve 41. A component-C storage tank that receives therein the separated component-C is connected to the outlet port of the column 3, provided in the second loop-path half 16B, through a component-C extraction valve 51.

The rotary valve 10 has a hollow cylindrical stationary member 11 and a cylindrical rotary member 12 which is disposed for rotation within the stationary member 11 and has an exterior wall slidably moving on the inner wall of the stationary member 11. Mounted on the rotary member 12 are four columns 14. When the rotary member 12 is rotated intermittently, all of the columns 14 are shifted by one column position during each rotation. In the stationary state of the rotary valve 10, the inlet port and outlet port of each column 14 belonging to each of the loop path halves 16A and 16B are connected through the nozzles 13 of the rotary valve 10 to the outlet port of the preceding column 14 and the inlet port of the succeeding column 14, respectively.

A density detector 54 has a chamber disposed within a tube connecting together the column 1 and column 2, and measures the total density of the components in the circulated liquid as a component density. The extracting position of component-A is set in the vicinity of the density detector 54 on the downstream side thereof, as viewed in the liquid flow direction within the loop path 16. Examples of the density detectors 54 include: a density meter utilizing electromagnetic wave such as near-ultraviolet rays, ultraviolet rays, visible rays, infrared rays, or far-infrared rays; a density meter utilizing a differential refractometer, a turbidimeter, or supersonic wave; a density meter utilizing an ion electrode; a density meter utilizing a pH meter; or a density meter utilizing a polarimeter. A signal from the density detector 54 is input to a process controller 100. The process controller 100 is configured as, for example, a computer system for control purpose, and controls the process performed in the chromatographic separator according to a predetermined order.

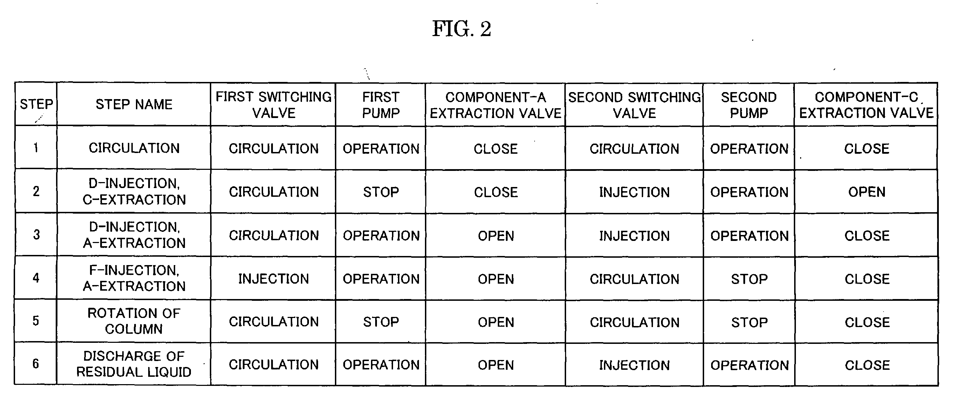

FIG. 2 shows the steps performed by the process controller 100 of the chromatographic separator according to the embodiment. The table lists, in the order of events, the steps for separating the feed liquid material into two separated components. It is assumed here in the present embodiment that a feed liquid material "F", containing a first component that moves at the highest speed, a second component that moves at the intermediate speed (between lowest and highest), and a third component that moves at the lowest speed, is injected into the chromatographic separator together with a liquid eluent "D", and that the feed liquid material "F" is separated into two components: a component (component-A) containing the first and second components and a third component (component-C).

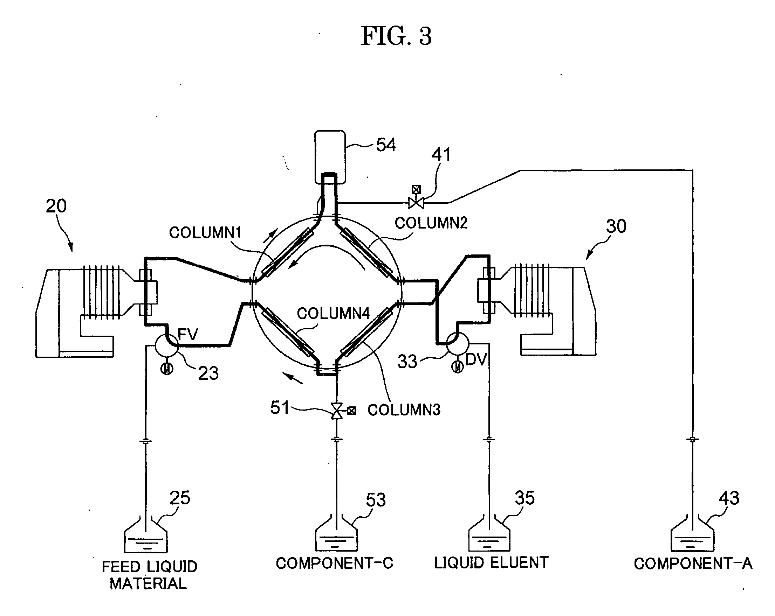

The first step is a circulation step, in which the feed liquid material "F" and liquid eluent "D" that have been received in the loop path 16 is circulated in the loop path, and during the circulation, the feed liquid material "F" is separated into component-A and component-C within the loop path 16. The liquid flow at this stage is shown in FIG. 3. The first switching valve 23 and second switching valve 33 are set to the circulation mode, and the component-A extraction valve 41 and component-C extraction valve 51 are closed, and both the first pump 20 and second pump 30 are operated. As a result, a loop path is formed which extends from the first switching valve 23, to pass through the first pump 20, column 1, density detector 54, column 2, second switching valve 33, second pump 30, column 3 and column 4 and return to the first switching valve 23.

The density detector 54 repeatedly detects the density of the components in the liquid during the operation time. When the total component density detected during the circulation step is increased from substantially zero to reach a predetermined reference density, it is judged that the density distribution of each of the components have been separated. Based on the judgement, the process controller ends the circulation step. The reference density is changed based on the time length between the time instant when the separation operation of the separator has been started and the time instant of the present moment. That is, at the time immediately after the operation has been started, the density distribution of the separated components is not sufficiently formed, so that a lower reference density is adopted. When the time has elapsed from the start of the operation, the density distribution is gradually separated. In this case, the reference density is increased, for example, in proportion to the elapsed time length from the start of the operation. After the separator has entered a steady operation state and accordingly the density distribution has entered a steady state, a reference density suitable for the steady state is adopted.

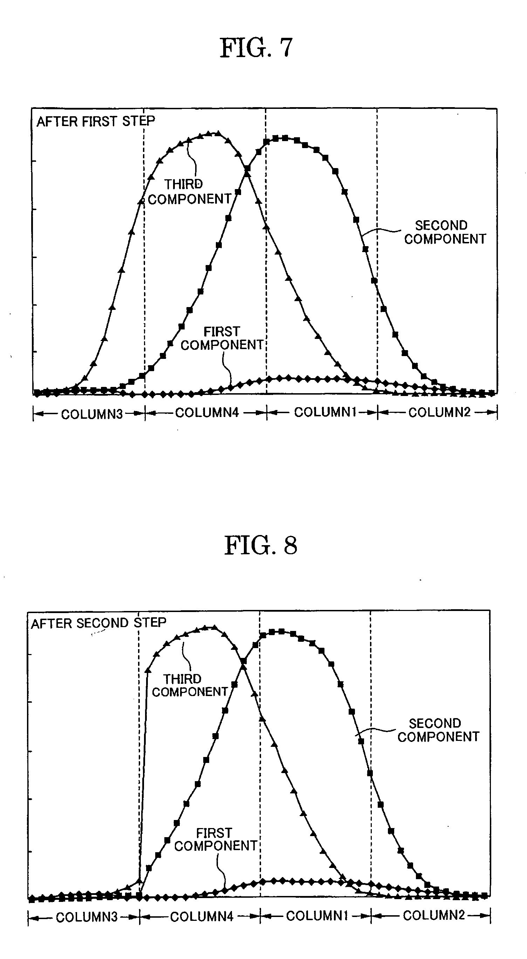

FIG. 7 shows the density distribution of each component in the columns 1 to 4 at the end of the circulation step. When the density detector 54 provided between the column 1 and the column 2 detects that the density of component-A containing the first and second components has reached a reference density or higher, the circulation step is ended. The operation time length of the circulation step is about three minutes and a half, for example, depending upon the detected result by the density detector 54.

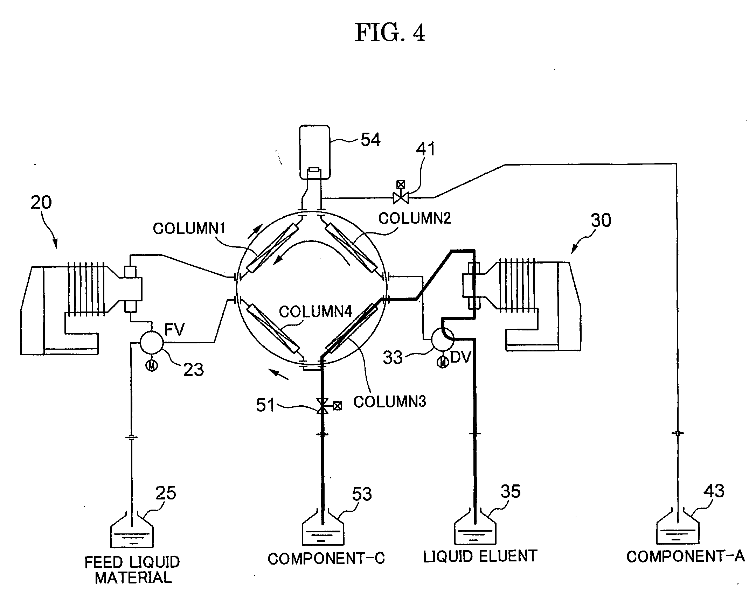

After the circulation step has been completed, the second step is started to inject the liquid eluent "D" and extract component-C. The liquid flow at this stage is shown in FIG. 4. In this step, the second pump 30 is set in motion, second switching valve 33 is set to the liquid injection mode, and the component-C extraction valve 51 is opened. In this state, component-C that remains in the column 3 at the end of the circulation step is extracted while injection of the liquid eluent "D" is performed. FIG. 8 shows the density distribution at the end of the second step. The second step continues, for example, about two minutes and a half.

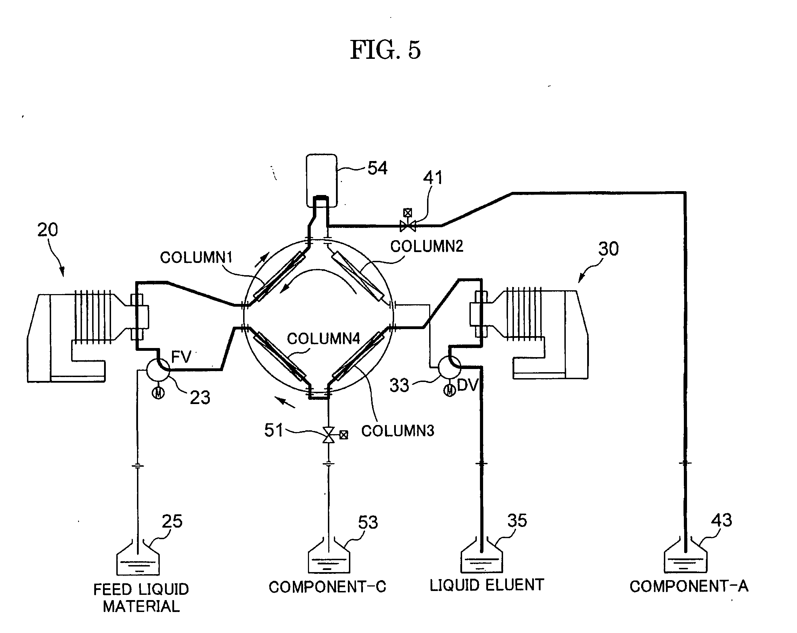

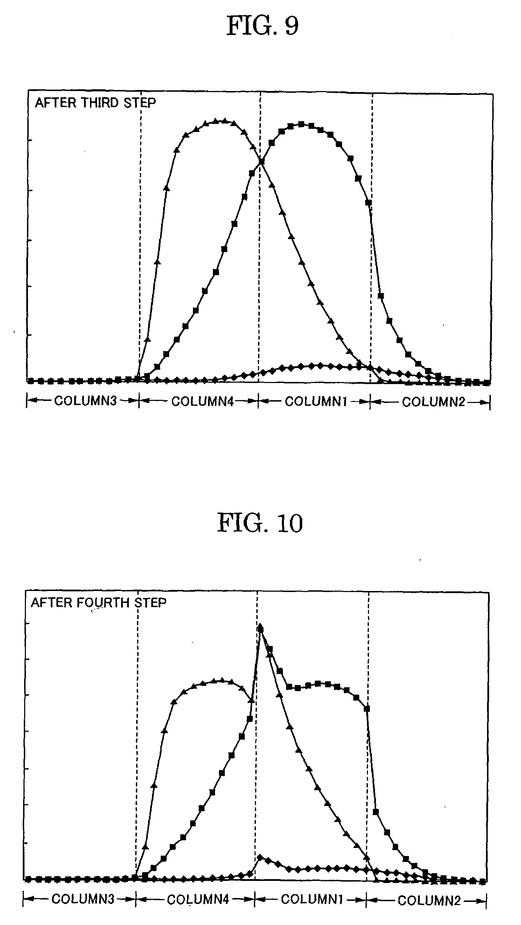

After the second step has been completed, the third step is started to inject the liquid eluent "D" and extract component-A. The liquid flow at this stage is shown in FIG. 5. That is, the first switching valve 23 is set to the circulation mode, second switching valve 33 is set to the liquid injection mode, component-C extraction valve 51 is closed, and component-A extraction valve 41 is opened. In this state, the first and second pumps 20 and 30 are set in motion. As a result, a flow path is formed extending from the liquid-eluent storage tank 35 through the column 3, column 4 and column 1 to the component-A storage tank. The operation time length of the third step is determined in proportion to the operation time length of the circulation step (first step). For example, the third step continues one minutes and fifty seconds. The reason for determining the operation time length of the third step based on the operation time length of the circulation step is as follows: although the in-column moving speed of each component is changed according to various conditions, the change in the in-column moving speed of each component in the third step can be regarded substantially the same as that in the circulation step, since the configuration of the flow path in the third step is substantially equal to that of the circulation step shown in FIG. 3. The density distribution immediately after the third step is shown in FIG. 9. As can be seen from FIG. 9, a part of component-A in the column 1 has been extracted.

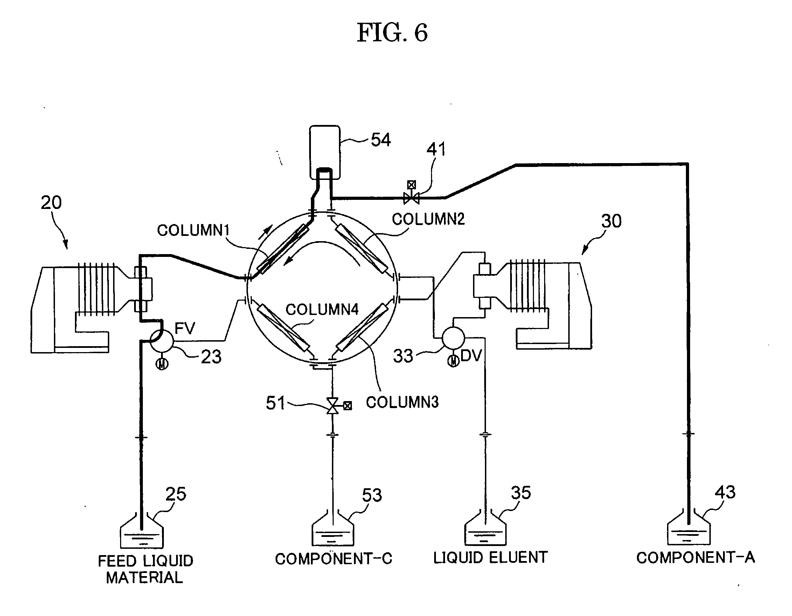

After the third step has been completed, the fourth step is started to inject the feed liquid material "F" and extract component-A. The liquid flow at this stage is shown in FIG. 6. The first switching valve is set to the liquid injection mode, the component-C extraction valve 41 is closed, and the first pump is set in motion. As a result, the flow path is formed extending from the feed-liquid-material storage tank 25 to the component-A storage tank 43. The operation time length of the fourth step is about forty seconds. The density distribution at the end of the fourth step is shown in FIG. 10. As can be seen from FIG. 10, a part of component-A in the column 1 has further been extracted.

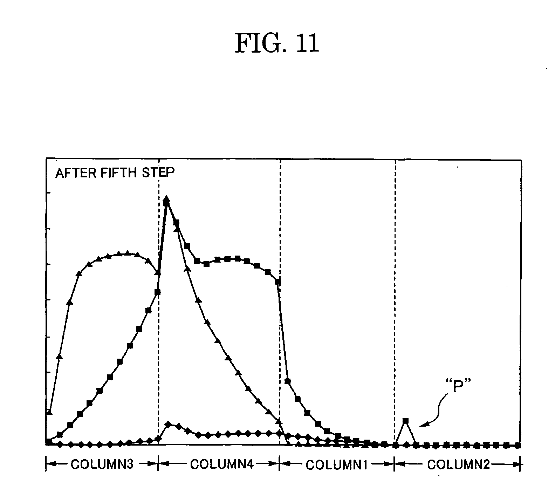

After the fourth step has been completed, the separator shifts to a column rotation step which constitutes the fifth step. This step allows the rotary member mounting thereon the columns to be rotated by one column in the rotary valve. This operation is performed in the stationary state of the first pump 20 and second pump 30. It takes about five seconds to end this step. FIG. 11 shows the density distribution at the end of the fifth step. As can be seen from FIG. 11, this density step corresponds to the density distribution of FIG. 10 shifted by one column to the upstream side.

After the fifth step has been completed, the separator shifts to the sixth step. The configuration of the flow path in this step is the same as that in the third step (injection of liquid eluent "D" and extraction of component-A) shown in FIG. 5. In the sixth step, component-A remaining in the density detector 54 is extracted. The liquid (portion "P" in FIG. 11) in the chamber of the density detector 54 that constitutes a part of the tube for connecting together the column 1 and column 2 is not moved by the rotation of the rotary valve, and accordingly may flow into the next column 2 in the following circulation step, to thereby cause a problem of decreasing the separation capability of the chromatographic separator. The sixth step is performed to prevent this problem.

When the sixth step has been completed, the separator returns to the circulation step to sequentially perform the above steps, thereby extracting component-A and component-C from the feed liquid material. Although the step of injection of liquid eluent "D" and extraction of component-C is performed as the second step, it is possible to perform the step of injection of liquid eluent "D" and extraction of component-A as the second step instead thereof.

While the present invention has been described with reference to the preferred embodiment, the present invention is not limited to the above embodiment and various modifications or alterations can be easily made therefrom by those skilled in the art without departing from the scope of the present invention. For example, although the present invention is applied to the intermittently-moving-bed chromatographic separator in the above embodiment, the present invention can be applied to a simulated-moving-bed chromatographic separator.

Further, although the density detector detects the total component density in the circulated liquid in the above embodiment, the density detector may be used to detect the density of a particular component in the circulated liquid.

### Industrial Applicability

The present invention can be used in the sugar industry, pharmaceutical industry, and the like for the purpose of extracting one or more components from a fluid that has been obtained in a natural or chemical reaction and includes a plurality of components.

## Claims

1. A chromatographic separator comprising an endless loop path including four or more columns each having an inlet port and an outlet port, said loop path being formed by coupling said outlet port of one of said columns to said inlet port of a succeeding one of said columns, said chromatographic separator having a function of extracting first and second components from a feed liquid material including therein two or more components while injecting said feed liquid material and a liquid eluent into said loop path, said chromatographic separator operating for: a circulation step of circulating liquid in said loop path; an extraction step of extracting said first or second component while injecting said feed liquid material or liquid eluent; and a flow-path switching step of sequentially switching an injection port for said feed liquid material, an injection port for said liquid eluent, an extracting position for said first component, and extracting position for said second component in said loop path to a downstream side of said loop path, **characterized by**:
a density detector, connected to said loop path in a vicinity of said extracting position for said first component, to sequentially or repeatedly detect a component density of said liquid in said loop path during said circulation step;
a comparator for comparing said component density against a reference density, and
a process controller for shifting from said circulation step to said extraction step if said comparator detects that said component density is higher than said reference density.

2. The chromatographic separator according to claim 1, wherein said extraction step comprises a second-component extraction step of extracting said second component while injecting said liquid eluent; a first-component extraction step of extracting said first component while injecting said liquid eluent; and another first-component extraction step of extracting said first component while injecting said feed liquid material.

3. The chromatographic separator according to claim 2, further comprising a timer for measuring a time interval between a start time of said circulation step and a time instant when said circulation step is shifted to said extraction step, wherein said process controller determines a time length of one or more extraction steps based on said time interval measured by said timer.

4. The chromatographic separator according to any one of claims 1 to 3, wherein said reference density is switched at least between an initial reference density set for a start of operation of said chromatographic separator and a normal reference density set for a steady operation of said chromatographic separator.

5. The chromatographic separator according to any one of claims 1 to 4, wherein said density detector is located in a vicinity of said extracting position for said first component on an upstream side thereof, and wherein said chromatographic separator further operating, subsequent to said flow-path switching step, for a remaining-liquid discharge step of discharging the liquid remaining in said density detector through said extracting position for said first component.
